# EUROPEAN PATENT APPLICATION

(11) **EP 4 738 165 A2**
(43) Date of publication of application: **06.05.2026**
(21) Application number: 26165948.6
(22) Date of filing: 19.03.2026
(51) Int. Cl.: G06F 21/57, G06F 8/65

(54) **BOOT CODE PATCHING APPARATUS AND METHOD, MEDIUM, DEVICE, AND SYSTEM ON CHIP**

(30) Priority: 07.11.2025 CN 202511632847
(71) Applicant: XG TECH PTE. LTD., Singapore 179098 (SG)
(72) Inventor: LIN, Tao, Singapore 179098 (SG); ZHANG, Wenbin, Singapore 179098 (SG)
(74) Representative: Casalonga

(57) **Abstract**

Embodiments of the present disclosure disclose a boot code patching apparatus and method, a medium, a device, and a system on chip. A first memory stores a boot code, and a second memory stores preset patch data. The processor reads the boot code from the first memory and executes the boot code; reads the patch data from the second memory in response to the execution proceeding to a first preset instruction; sets a breakpoint for the boot code through a debug control channel based on the patch data, and continues executing the boot code; in response to the execution proceeding to any breakpoint of the boot code, jumps to a patch code corresponding to that breakpoint in the patch data; and in response to execution of the patch code corresponding to the breakpoint being completed, jumps to a return address corresponding to the breakpoint, and continues executing the boot code.

## Description

### FIELD OF THE INVENTION

The present disclosure relates to technologies of integrated circuits, and in particular, to a boot code patching apparatus and method, a medium, a device, and a system on chip.

### BACKGROUND OF THE INVENTION

An electronic device (or a system on chip) typically executes a boot code (or referred to as a bootstrap code) when powered on, to initialize a resource or a component of the electronic device, and load and run an operating system. To avoid execution of unauthorized software on the electronic device, the boot code may verify legitimacy of the operating system and application software through a secure boot mechanism. Being a lowest-level code executed during startup of the electronic device, the boot code is generally hardcoded into a read-only memory (ROM) of the electronic device to avoid malicious modification of the boot code. The hardened boot code may be referred to as a ROM code. If an error occurs in the ROM code, the ROM code also cannot be modified to correct the error.

To correct the error in the ROM code, in related technologies, an instruction in the ROM code is usually modified by adding hardware logic. The hardware logic includes, for example, a storage unit, a comparison unit, a branch instruction generator, and a multiplexer. The added hardware logic makes hardware implementation of the electronic device more complex.

### SUMMARY OF THE INVENTION

Embodiments of the present disclosure provide a boot code patching apparatus and method, a medium, a device, and a system on chip, to implement effective patching of a boot code without increasing complexity of hardware implementation.

According to a first aspect of an embodiment of the present disclosure, a boot code patching apparatus is provided, including: a first memory, configured to store a boot code; a second memory, configured to store preset patch data; and a processor, configured to: read the boot code from the first memory and execute the boot code; read the patch data from the second memory in response to a first preset instruction in the boot code; set a breakpoint for the boot code through a debug control channel based on the patch data; in response to the execution proceeding to the breakpoint of the boot code, jump to a patch code corresponding to the breakpoint in the patch data; and in response to execution of the patch code corresponding to the breakpoint being completed, jump to a return address corresponding to the breakpoint, and continue executing the boot code.

According to a second aspect of an embodiment of the present disclosure, a boot code patching method is provided, including: reading a boot code from a first memory and executing the boot code; reading patch data from a second memory in response to a first preset instruction in the boot code; setting a breakpoint for the boot code through a debug control channel based on the patch data; in response to the execution proceeding to the breakpoint of the boot code, jumping to a patch code corresponding to the breakpoint in the patch data; and in response to execution of the patch code corresponding to the breakpoint being completed, jumping to a return address corresponding to the breakpoint, and continuing executing the boot code.

According to a third aspect of an embodiment of the present disclosure, a computer readable storage medium is provided. The storage medium stores a computer program, and the computer program is executed by a processor to implement the boot code patching method according to any one of the foregoing embodiments of the present disclosure.

According to a fourth aspect of an embodiment of the present disclosure, an electronic device is provided. The electronic device includes: a processor; and a memory, configured to store processor-executable instructions. The processor is configured to read the executable instructions from the memory, and execute the executable instructions to implement the boot code patching method according to any one of the foregoing embodiments of the present disclosure.

According to a fifth aspect of an embodiment of the present disclosure, a computer program product is provided. When instructions in the computer program product are executed by a processor, the boot code patching method according to any one of the foregoing embodiments of the present disclosure is implemented.

According to the boot code patching apparatus and method, the medium, the device, and the system on chip that are provided in the foregoing embodiments of the present disclosure, the boot code is stored by the first memory, and the preset patch data is stored by the second memory. During startup of the electronic device or the system on chip, the processor may read the boot code from the first memory and execute the read boot code; read the patch data from the second memory in response to the execution proceeding to the first preset instruction in the boot code; further set the breakpoint for the boot code through the debug control channel based on the patch data, and continue executing the boot code; in response to the execution proceeding to any breakpoint of the boot code, jump to the patch code corresponding to that breakpoint in the patch data; and in response to the execution of the patch code corresponding to the breakpoint being completed, jump to the return address corresponding to the breakpoint, and continue executing the boot code. Thus, the patch data is stored by the second memory, and the debug control channel of the electronic device or the system on chip is used to set the breakpoint for the boot code and jump to the patch code at the breakpoint, so as to replace a part of the boot code that needs to be patched, thereby completing patching of the boot code. Since the debug control channel is an original hardware channel of the electronic device or the system on chip, effective patching of the boot code is completed without adding hardware logic.

### BRIEF DESCRIPTION OF THE DRAWINGS

FIG. 1 is an exemplary application scenario of a boot code patching apparatus according to the present disclosure;
FIG. 2 is a schematic diagram of a structure of a boot code patching apparatus according to an exemplary embodiment of the present disclosure;
FIG. 3 is a schematic diagram of a structure of a boot code patching apparatus according to another exemplary embodiment of the present disclosure;
FIG. 4 is a schematic diagram of a structure of a boot code patching apparatus according to still another exemplary embodiment of the present disclosure;
FIG. 5 is a schematic diagram of a structure of a boot code patching apparatus according to yet another exemplary embodiment of the present disclosure;
FIG. 6 is a schematic flowchart of a boot code patching method according to an exemplary embodiment of the present disclosure;
FIG. 7 is a schematic flowchart of a boot code patching method according to another exemplary embodiment of the present disclosure;
FIG. 8 is a schematic flowchart of a boot code patching method according to still another exemplary embodiment of the present disclosure;
FIG. 9 is a flow block diagram of a boot code patching method according to an exemplary embodiment of the present disclosure; and
FIG. 10 is a diagram of a structure of an electronic device according to an embodiment of the present disclosure.

### DETAILED DESCRIPTION OF THE EMBODIMENTS

To explain the present disclosure, exemplary embodiments of the present disclosure are described below in detail with reference to accompanying drawings. Obviously, the embodiments described are merely some, rather than all of embodiments of the present disclosure. It should be understood that the present disclosure is not limited to the exemplary embodiments.

It should be noted that unless otherwise specified, the scope of the present disclosure is not limited by relative arrangement, numeric expressions, and numerical values of components and steps described in these embodiments.

### Overview of this disclosure

In a process of implementing the present disclosure, the inventor finds that an electronic device (or a system on chip) typically executes a boot code (or referred to as a bootstrap code) when powered on, to initialize a resource or a component of the electronic device, and load and run an operating system. To avoid execution of unauthorized software on the electronic device, the boot code may verify legitimacy of the operating system and application software through a secure boot mechanism. Being a lowest-level code executed during startup of the electronic device, the boot code is generally hardcoded into a read-only memory (ROM) of the electronic device to avoid malicious modification of the boot code. The hardened (or referred to as solidified) boot code may be referred to as a ROM code. If an error occurs in the ROM code, the ROM code also cannot be modified to correct the error.

To correct the error in the ROM code, in related technologies, an instruction in the ROM code is usually modified by adding hardware logic. The hardware logic includes, for example, a storage unit, a comparison unit, a branch instruction generator, and a multiplexer. The added hardware logic makes hardware implementation of the electronic device more complex.

### Exemplary overview

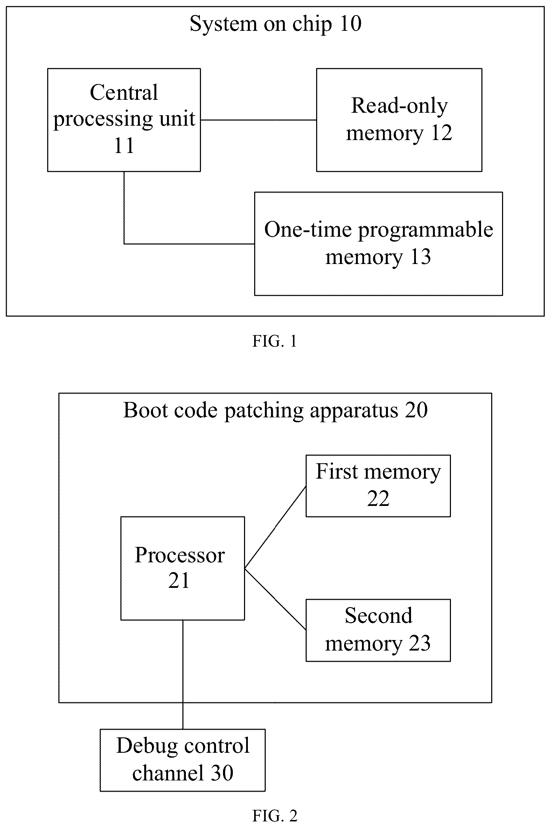

FIG. 1 is an exemplary application scenario of a boot code patching apparatus according to the present disclosure. As shown in FIG. 1, a system on chip 10 includes a central processing unit (CPU for short) 11, a read-only memory (ROM for short) 12, and a one-time programmable (OTP for short) memory 13. The boot code patching apparatus in the present disclosure is implemented based on the central processing unit 11, the read-only memory 12, and the one-time programmable memory 13. For example, the read-only memory 12 may be used as a first memory, and the one-time programmable memory 13 may be used as a second memory. The read-only memory 12 is configured to store a boot code. When an exception occurs in the boot code, corresponding patch data is designed according to an instruction having an exception in the boot code, and the patch data is written into the one-time programmable memory 13. During startup of the system on chip 10, the central processing unit 11, serving as a processor that executes the boot code, reads the boot code from the read-only memory 12, and executes the read boot code, which includes a first preset instruction that triggers reading of the patch data; reads the patch data from the second memory in response to the execution of the processor proceeding to the first preset instruction in the boot code, wherein the patch data includes relevant information about an instruction needing to be patched in the boot code, and the relevant information includes, for example but is not limited to, a source address, a return address, and a corresponding patch code of the instruction needing to be patched; sets a breakpoint for the boot code through a debug control channel, based on the patch data; in response to the execution proceeding to any breakpoint in the boot code, jumps to the patch data corresponding to that breakpoint in the patch data, and executes the patch code in the patch data, to replace the instruction needing to be patched in the boot code; and in response to execution of the patch code corresponding to the breakpoint being completed, jumps to a return address corresponding to the breakpoint, and continues executing the boot code until patch codes corresponding to all breakpoints in the boot code have been executed and the boot code has been executed. Thus, the patch data is stored by the one-time programmable memory 13, and the debug control channel of the system on chip is used to set the breakpoint for the boot code and jump to the patch code at the breakpoint, so as to replace a part of the boot code that needs to be patched, thereby completing patching of the boot code. Since the debug control channel is an original hardware channel of the electronic device or the system on chip, effective patching of the boot code is completed without adding hardware logic.

### Exemplary apparatus

FIG. 2 is a schematic diagram of a structure of a boot code patching apparatus according to an exemplary embodiment of the present disclosure. The boot code patching apparatus provided in this embodiment of the present disclosure may be applied to an electronic device and a system on chip. The electronic device may include, for example but not limited to, an in-vehicle computing platform (or referred to as a vehicle-mounted terminal), a robot terminal, a mobile phone, a tablet, and a wearable device. The system on chip may include, but not limited to, an intelligent driving system on chip and an intelligent cockpit system on chip. As shown in FIG. 2, a boot code patching apparatus 20 in this embodiment of the present disclosure may include a processor 21, a first memory 22, and a second memory 23.

The first memory 22 is configured to store a boot code.

The second memory 23 is configured to store preset patch data.

The processor 21 is respectively coupled to the first memory 22 and the second memory 23, and is configured to:
read the boot code from the first memory 22 and execute the boot code; read the patch data from the second memory 23 in response to a first preset instruction in the boot code; set a breakpoint for the boot code through a debug control channel 30 based on the patch data; in response to the execution proceeding to the breakpoint of the boot code, jump to a patch code corresponding to the breakpoint in the patch data; and in response to execution of the patch code corresponding to the breakpoint being completed, jump to a return address corresponding to the breakpoint, and continue executing the boot code.

The boot code is a code hardcoded (or solidified) into the first memory 22, and core functions thereof include, but are not limited to, hardware self-test, memory mapping, and system loading. The first memory 22 may be, but not limited to, a read-only memory or another memory that meets requirements for code security.

The second memory 23 is a programmable memory that allows a user to write the patch data into the second memory 23 when an error occurs in the boot code and the boot code needs to be patched. Optionally, to ensure security of the patch data, the second memory 23 may be a one-time programmable (OTP for short) memory. The patch data is relevant data of an alternate code (or referred to as a patch code) used to replace at least a part of a code in the boot code. The patch data may include, but not limited to, a source address, a return address, and a patch code of a part of a code needing to be patched in the boot code. The source address represents an address of the part of the code needing to be patched in the boot code, and the return address represents an address of the boot code that is returned to after the execution of the patch code is completed. The patch code is an alternate code for replacing the part of the code needing to be patched.

When it is determined that an error occurs in the boot code in the first memory 22, the user may locate the part of the code needing to be patched in the boot code based on the error in the boot code. The part of the code needing to be patched may be referred to as a target subcode. A patch code corresponding to the target subcode is created, and a source address and a return address corresponding to the patch code are determined based on a start address and an end address of the target subcode. The patch data is packaged according to a preset patch format, based on the source address, the return address, and the patch code, and is written into the second memory 23.

The processor 21 may be, but not limited to, a central processing unit (CPU for short), and may be coupled to the first memory 22 and the second memory 23 in any way. Coupling manners are, for example but are not limited to, a bus, a network on chip, and inter-core communication.

The first preset instruction is an instruction for loading the patch data. When the electronic device or the system on chip where the boot code patching apparatus 20 is located starts up, the processor 21 may read the boot code from the first memory 22 and execute the boot code. When the execution proceeds to the first preset instruction in the boot code, the processor 21 reads the patch data from the second memory 23 in response to the first preset instruction. Optionally, the processor 21 may write the patch data into a random access memory (RAM for short).

After reading the patch data from the second memory 23, the processor 21 may set the breakpoint for the boot code through the debug control channel 30 based on the patch data. The debug control channel 30 is a hardware control channel used for debugging in the electronic device or the system on chip, and may access a memory or a register within the electronic device or the system on chip through specific instructions, and support debugging operations such as breakpoint setting and single step execution. On this basis, the processor 21 may set the breakpoint for the boot code through the debug control channel 30 based on the patch data. The breakpoint is a marker used to pause code execution. The specific operation of setting the breakpoint through the debug control channel 30 may be any feasible operation. For example, the processor 21 writes a breakpoint address into a breakpoint register. When a program counter (or referred to as a PC pointer) points to the breakpoint address, it indicates that the execution proceeds to the breakpoint. Optionally, a position of the set breakpoint is a position after the first preset instruction in the boot code. Optionally, the breakpoint is a hardware breakpoint.

After completing the operation of setting the breakpoint for the boot code, the processor 21 continues executing the boot code; if the execution proceeds to any breakpoint in the boot code, jumps to the patch code corresponding to that breakpoint in the patch data and executes that patch code, to replace the target subcode in the boot code that needs to be patched and corresponds to that breakpoint; and jumps to a return address corresponding to that breakpoint in response to execution of the patch code corresponding to that breakpoint being completed, which is equivalent to a function of the target subcode in the boot code being completed. The return address is an address of a next instruction in the target subcode corresponding to the breakpoint in the boot code, that is, an address after the PC pointer points to the target subcode. The processor 21 continues executing the boot code based on the return address. Optionally, if there are other breakpoints during the process of continuing executing the boot code, the foregoing operation performed when the execution proceeds to the breakpoint is followed until the execution of the boot code is completed. Details are not described herein.

Optionally, the boot code patching apparatus 20 may include the debug control channel 30. Alternatively, the boot code patching apparatus 20 is independent of the debug control channel 30.

Optionally, the processor 21 may switch the debug control channel 30 from a closed status to an open status by configuring a relevant register of the debug control channel 30, so that the processor 21 can set the breakpoint for the boot code through the debug control channel 30.

According to the boot code patching apparatus provided in this embodiment, the boot code is stored by the first memory, and the preset patch data is stored by the second memory. During startup of the electronic device or the system on chip, the processor may read the boot code from the first memory and execute the read boot code; read the patch data from the second memory in response to the execution proceeding to the first preset instruction in the boot code; further set the breakpoint for the boot code through the debug control channel based on the patch data, and continue executing the boot code; in response to the execution proceeding to any breakpoint of the boot code, jump to the patch code corresponding to that breakpoint in the patch data; and in response to the execution of the patch code corresponding to the breakpoint being completed, jump to the return address corresponding to the breakpoint, and continue executing the boot code. Thus, the patch data is stored by the second memory, and the debug control channel of the electronic device or the system on chip is used to set the breakpoint for the boot code and jump to the patch code at the breakpoint, so as to replace the part of the boot code that needs to be patched, thereby completing patching of the boot code. Since the debug control channel is an original hardware channel of the electronic device or the system on chip, effective patching of the boot code is completed without adding hardware logic.

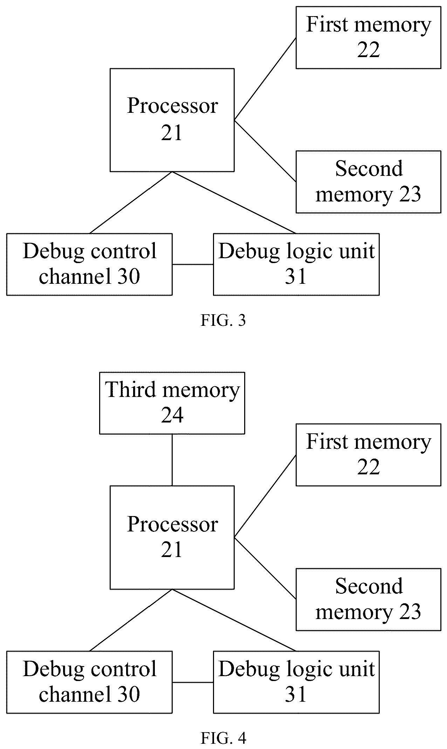

FIG. 3 is a schematic diagram of a structure of a boot code patching apparatus according to another exemplary embodiment of the present disclosure.

In some optional embodiments, on the basis of the embodiment shown in FIG. 2, after reading the patch data from the second memory, the processor 21 is specifically configured to:
configure and open the debug control channel 30; determine, based on the patch data, patch information corresponding to at least one patch, wherein the patch information corresponding to any patch includes a source address corresponding to that patch; and set at least one breakpoint for the boot code based on the source address corresponding to the at least one patch, and configure a debug logic unit 31, so that the debug logic unit 31 can generate debug exception information corresponding to the breakpoint when the execution proceeds to the breakpoint.

The debug control channel 30 may be switched from the closed status to the open status by configuring the relevant register of the debug control channel 30, so as to open the debug control channel 30, so that the processor 21 can enter a debugging status and set the breakpoint for the boot code through the debug control channel. The patch data may include patch information of one or more patches. Therefore, the patch information corresponding to at least one patch may be determined based on the patch data. Each patch corresponds to a segment of target subcode in the boot code. The patch information corresponding to any patch may include, but not limited to, a source address, a return address, and a patch code corresponding to that patch. For each patch, a breakpoint corresponding to that patch is set for the boot code. For example, the source address corresponding to that patch is set as the breakpoint address. When an instruction corresponding to the source address is executed by the processor 21, it is determined that the execution proceeds to the breakpoint, thereby implementing breakpoint detection.

The debug logic unit 31 is a logic unit in the electronic device or the system on chip that is specifically used for debugging, tracking, and fault diagnosis, with functions such as breakpoint management, real-time tracking, and status monitoring. The breakpoint management function supports a hardware breakpoint and a software breakpoint, and pauses program (or referred to as a code) execution through the debug exception information. A code execution channel, such as an instruction flow or a data flow, is recorded through the real-time tracking function Through the status monitoring function, content of a register or a memory may be read in a real-time manner, or bus activities may be monitored, so as to verify design correctness. When the execution proceeds to any breakpoint, the processor 21 triggers the debug logic unit 31 to generate debug exception information corresponding to that breakpoint. The processor 21 pauses the execution of the boot code in response to the debug exception information; obtains, based on the source address of the breakpoint, the patch code corresponding to the breakpoint from the patch data, and executes the patch code; and in response to the execution of the patch code corresponding to the breakpoint being completed, jumps to the return address based on the return address corresponding to the patch code, and continues executing the boot code. Optionally, in response to the debug exception information, the processor 21 executes an exception handling function corresponding to the debug exception information, wherein a function of the exception handling function is to obtain, based on the source address of the breakpoint, the patch code corresponding to the breakpoint from the patch data, and executes the patch code; and in response to the execution of the patch code corresponding to the breakpoint being completed, jumps to the return address based on the return address corresponding to the patch code.

Optionally, the boot code patching apparatus 20 in this embodiment of the present disclosure may include the debug logic unit 31 or may be independent of the debug logic unit 31.

The debug exception information is a specific type of exception triggered during execution of a code by the processor due to a specific debugging condition. Different from the debug exception information, a debug event is a broader notification mechanism that covers various types of events that may occur during a debugging process, such as creation and exit of a process/thread or output of a debug string. According to this embodiment of the present disclosure, a condition for the debug logic unit 31 to generate the debug exception information may be configured based on the breakpoint corresponding to the patch, so that when the execution of the processor 21 proceeds to the breakpoint, the debug logic unit 31 can generate the debug exception information corresponding to the breakpoint, avoiding generation of a debug event. This enables the processor 21 to pause the execution of the boot code based on the debug exception information, but instead execute the patch code. Thus, an existing debugging system of the electronic device or the system on chip can be used to patch the boot code, thereby avoiding adding hardware to the electronic device or the system on chip.

In this embodiment of the present disclosure, the debug control channel is configured and opened to ensure that the processor can set the breakpoint for the boot code through the debug control channel. The debug logic unit is configured, so that the processor can trigger the debug logic unit to generate the debug exception information corresponding to the breakpoint when the execution proceeds to the breakpoint. The debug exception information can enable the processor to pause the execution of the boot code, but instead execute the patch code. Thus, the existing debugging system of the electronic device or the system on chip is used to patch the boot code, thereby avoiding adding hardware to the electronic device or the system on chip.

In some optional embodiments, configuring and opening the debug control channel includes:
configuring a first preset register corresponding to the debug control channel to a first preset status.

The first preset register is a switch status register of the debug control channel, and the first preset status is a register status in which the debug control channel is kept in the open status. The first preset register includes, but is not limited to, a debug enable register and a debug logic unit control register. The debug enable register is configured to enable or disable a debugging function. The debug logic unit control register is used to configure breakpoints and access permission, and includes, but is not limited to, a SLK (software lock status for this component) register and an OSLK (OS lock status, operating system-level lock status) register. A function of the SLK register is to control permission to a write operation for a specific register, and SLK needs to be unlocked before a debug mode is entered. A function of the OSLK register is to control access permission to some registers of an external debugger, and whether to allow the processor to enter a debugging status. An OSLK is unlocked by updating a status of the OSLK register, so that the processor can enter the debugging status.

In some optional embodiments, configuring the debug logic unit 31 includes:
configuring a second preset register corresponding to the debug logic unit 31 to a second preset status.

The second preset register is a register related to work of the debug logic unit 31. The second preset status is a status in which the debug logic unit can generate the debug exception information under a breakpoint related condition. The second preset register includes, but is not limited to, a breakpoint register, a debug exception control register, and an interrupt mask register. The breakpoint register is configured to store a breakpoint trigger address, a breakpoint type, a matching condition, and the like. The debug exception control register is configured to enable generation of a debug exception, so as to ensure that the debug exception information is generated when the matching condition of the breakpoint is met. The interrupt mask register is configured to mask an interrupt request, so as to ensure that the debug exception has a higher priority than other interrupt requests to avoid being preempted.

Optionally, the processor 21 is further configured to switch an exception level to EL1. In a case of EL1, the processor 21 responds to the debug exception information, and jumps to the patch code to patch the boot code. EL1 is a kernel mode for running an operating system kernel, and is responsible for managing hardware resources, processing system calls, and synchronizing exceptions.

In the embodiments of the present disclosure, by configuring the statuses of the debug control channel and the preset register of the debug logic unit, it is ensured that the processor can effectively complete a patching function of the boot code through the debug control channel and the debug logic unit.

In some optional embodiments, in response to the execution proceeding to the breakpoint of the boot code, jumping to the patch code corresponding to the breakpoint in the patch data includes:
in response to the execution proceeding to the breakpoint of the boot code, generating target debug exception information corresponding to the breakpoint by the debug logic unit; determining, based on the target debug exception information, a patch code of a target patch corresponding to the breakpoint from the patch data, and determining the patch code of the target patch as the patch code corresponding to the breakpoint; and executing the patch code corresponding to the breakpoint.

The boot code may include one or more breakpoints. In response to the execution proceeding to any breakpoint of the boot code, the target debug exception information corresponding to that breakpoint may be generated by the debug logic unit. The target debug exception information may include a source address corresponding to that breakpoint or other identification information (such as a patch number) that can identify a patch corresponding to that breakpoint. Alternatively, the target debug exception information has another association relationship with the source address or the identification information corresponding to the breakpoint. Thus, the source address or other identification information corresponding to the breakpoint may be obtained based on the target debug exception information. The patch code of the target patch corresponding to the breakpoint is determined from the patch data, so as to obtain the patch code corresponding to the breakpoint. The patch code corresponding to the breakpoint is executed, to replace a target subcode corresponding to the breakpoint in the boot code. In response to the execution of the patch code corresponding to the breakpoint being completed, the return address corresponding to the patch code is jumped to, to continue executing the boot code. Others are deduced by analogy. Every time the execution proceeds to a breakpoint of the boot code, the corresponding patch code is jumped to according to the foregoing process. After the execution of the patch code is completed, the execution of the boot code is continued until the execution of the boot code is completed, thereby ensuring accuracy and reliability of an overall function of the boot code.

FIG. 4 is a schematic diagram of a structure of a boot code patching apparatus according to still another exemplary embodiment of the present disclosure.

In some optional embodiments, on the basis of any one of the foregoing embodiments, as shown in FIG. 4, the boot code patching apparatus 20 further includes a third memory 24, which is coupled to the processor 21.

In some optional embodiments, after reading the patch data from the second memory 23, the processor 21 is further configured to: store the patch data into the third memory 24, which is a volatile memory.

The determining, based on the target debug exception information, a patch code of a target patch corresponding to the breakpoint from the patch data includes:
determining, based on the target debug exception information, a target source address corresponding to the breakpoint; reading the patch data from the third memory 24, and determining, based on the patch data, patch information corresponding to at least one patch, where the patch information corresponding to any patch includes a source address, a return address, and a patch code corresponding to that patch; and matching the target source address with the source address in the patch information corresponding to the at least one patch, and determining, based on a matching result, the patch code of the target patch corresponding to the breakpoint.

The target debug exception information may include the target source address corresponding to the breakpoint, and the target source address corresponding to the breakpoint may be obtained from the target debug exception information. Alternatively, the target source address corresponding to the breakpoint when the target debug exception information is generated may be obtained from a register corresponding to the target debug exception information. A specific manner for obtaining the target source address corresponding to the breakpoint is not limited.

Optionally, the third memory 24 may be, but not limited to, a random access memory. After reading the patch data from the second memory 23, the processor 21 stores the patch data into the third memory 24 for subsequent use. In response to the target debug exception information, the processor 21 determines the target source address of the breakpoint corresponding to the target debug exception information, and reads the patch data from the third memory 24 to determine the patch information corresponding to the patch based on the patch data. The target source address is matched with the source address of the patch, to obtain a matching result, which may include a source address of a patch matching the target source address. The patch information corresponding to the target source address is determined based on the source address of the patch matching the target source address, and the patch code corresponding to the target source address is obtained from the patch information. This patch code is determined as the patch code corresponding to the breakpoint. The processor 21 executes the patch code to replace the target subcode in the boot code that needs to be patched and corresponds to that breakpoint. Optionally, the return address corresponding to the patch code may also be obtained from the patch information, so that the boot code is returned to based on the return address after the execution of the patch code is completed, so as to continue to execute a boot code after the target subcode corresponding to the breakpoint.

Optionally, after the patch data is read from the third memory 24, the patch data may be parsed according to a preset patch format, so as to obtain the patch information corresponding to the patch. Further, the target source address is matched with the source address of the patch, and the patch code of the target patch corresponding to the breakpoint is determined based on a matching result. This patch code is used as the patch code corresponding to the breakpoint. The preset patch format may be set according to a data communication protocol, and may include, but not limited to, a header and a payload (Data). The header records meta information that controls transmission of a data packet, such as a protocol type, a length, and a control flag. The payload is used to record the patch information.

In the embodiments of the present disclosure, by transferring the patch data from the second memory to the volatile third memory, it is convenient to quickly obtain the patch code corresponding to the breakpoint from the third memory when the execution proceeds to the breakpoint, thereby improving startup efficiency of the electronic device or the system on chip.

In some optional embodiments, on the basis of any one of the foregoing embodiments, after reading the patch data from the second memory 23, the processor 21 is further configured to:
parse the patch data according to the preset patch format to obtain the patch information corresponding to the at least one patch, wherein the patch information corresponding to any patch includes the source address, the return address, and the patch code corresponding to that patch; and store the patch information corresponding to the at least one patch into the third memory 24, which is a volatile memory.

The preset patch format is a format of the preset patch data. Optionally, the preset patch format includes a header and a payload. The payload may include, but not limited to, a patch identification field, a source address field, a return address field, and a patch code field, as shown in Table 1 below.

**Table 1**

| Patch number | Source address | Return address | Patch code |
|---|---|---|---|
| 1 | Src_addr1 | Ret_addr1 | Patch_conten1={a1, a2, ...} |
| 2 | Src_addr2 | Ret_addr2 | Patch_conten2={b1, b2, ...} |
| 3 | ... | ... | ... |

The patch number or the source address may be used as the identification information of the patch. The patch data includes patch information of one or more patches. The patch information of each patch includes the patch number, the source address, the return address, and the patch code of that patch. Src_addri represents the source address of an i^{th} patch, Ret_addri represents the return address of the i^{th} patch, Patch_conteni represents the patch code of the i^{th} patch, and {, , ...} on a right side of an equal sign (=) in the patch code represents specific code content of the patch code. It is satisfied that i=1, 2, ..., or N, wherein N represents a quantity of patches.

After reading the patch data from the second memory 23, the processor 21 parses the patch information corresponding to the patch from the patch data according to the preset patch format, and stores the patch information into the third memory 24. When the execution proceeds to the breakpoint, the target source address corresponding to the breakpoint may be directly matched with the patch information stored in the third memory 24, so as to avoid parsing the patch data at each breakpoint in a real-time manner, thereby further improving execution efficiency for the boot code.

In some optional embodiments, the determining, based on the target debug exception information, a patch code of a target patch corresponding to the breakpoint from the patch data includes:
determining, based on the target debug exception information, a target source address corresponding to the breakpoint; reading the patch information corresponding to the at least one patch from the third memory 24; and matching the target source address with the source address in the patch information corresponding to the at least one patch, and determining, based on a matching result, the patch code of the target patch corresponding to the breakpoint.

For a specific operation of determining, based on the target debug exception information, the target source address corresponding to the breakpoint, reference may be made to the foregoing embodiments. The pre-stored patch information of the patch is read from the third memory 24, the target source address is matched with the source address in the patch information of the patch, and the patch code corresponding to the breakpoint is obtained based on the matching result.

In the embodiments of the present disclosure, the patch data is parsed in a timely manner after being read from the second memory, and the patch information of the patch that is obtained through parsing is stored into the third memory, which facilitates quick reading of the patch information of the patch from the third memory when the execution proceeds to the breakpoint. The patch information is matched with the target source address of the breakpoint, so as to avoid real-time parsing of the patch data when the execution proceeds to the breakpoint, thereby reducing parsing times, and further improving execution efficiency for the boot code.

In some optional embodiments, the patch data includes the return address corresponding to at least one patch.

In response to execution of the patch code corresponding to the breakpoint being completed, jumping to the return address corresponding to the breakpoint, and continuing executing the boot code includes:
in response to the execution of the patch code corresponding to the breakpoint being completed, obtaining the return address corresponding to the breakpoint from the patch data; and jumping to the return address, and executing an instruction corresponding to the return address in the boot code.

The patch data includes the patch information of one or more patches, and the patch information includes the return address corresponding to the patch. The return address corresponding to the breakpoint may be obtained from the patch data based on the target source address corresponding to the breakpoint. The PC pointer points to the return address, so that the processor 21 reads an instruction from a storage space corresponding to the return address, and executes the read instruction to return from the patch code to the boot code, so as to continue executing the boot code.

In the embodiments of the present disclosure, the return address is set for the patch code, so that the processor can accurately return to the boot code after the execution of the patch code is completed, to continue to execute a subsequent boot code, thereby ensuring normal startup of the electronic device or the system on chip.

In some optional embodiments, the second memory 23 is a one-time programmable memory. After reading the patch data from the second memory 23, the processor 21 is further configured to: perform legitimacy and integrity verification on the patch data, to obtain a verification result.

Setting a breakpoint for the boot code through the debug control channel based on the patch data includes:
in response to the verification result being passed, setting a breakpoint for the boot code through the debug control channel based on the patch data.

The legitimacy verification is to verify whether the patch data conforms to a preset rule, and the integrity verification is to verify whether the patch data is tampered with or lost during transmission and storage.

In some optional embodiments, during creation of the patch data, a specific field may be set in the patch data and a preset numerical value may be set for the specific field. After the patch data is read from the second memory 23, a numerical value of the specific field is obtained from the patch data and is compared with the preset numerical value, so as to determine the legitimacy of the patch data based on a comparison result. If the numerical value of the specific field is the preset numerical value, it is determined that a legitimacy verification result of the patch data is passed. Optionally, the legitimacy of the patch data may be verified through encryption. For example, the patch data is encrypted when written into the second memory 23, and ciphertext of the patch data is written into the second memory 23. During the startup process, the ciphertext of the patch data is read from the second memory 23, and is decrypted by a preset key. If decryption is successful, it is determined that the legitimacy verification result of the patch data is passed.

In some optional embodiments, integrity verification may be implemented through CRC (cyclic redundancy check), a hash algorithm, or other verification manners. This is not specifically limited.

When it is determined that the verification result of the legitimacy and the integrity of the patch data is passed, the breakpoint is set for the boot code through the debug control channel based on the patch data, thereby ensuring the legitimacy and the integrity of the patch data.

In the embodiments of the present disclosure, the legitimacy and integrity verification are performed on the patch data to ensure the legitimacy and the integrity of the patch data, thereby ensuring successful execution of the boot startup process.

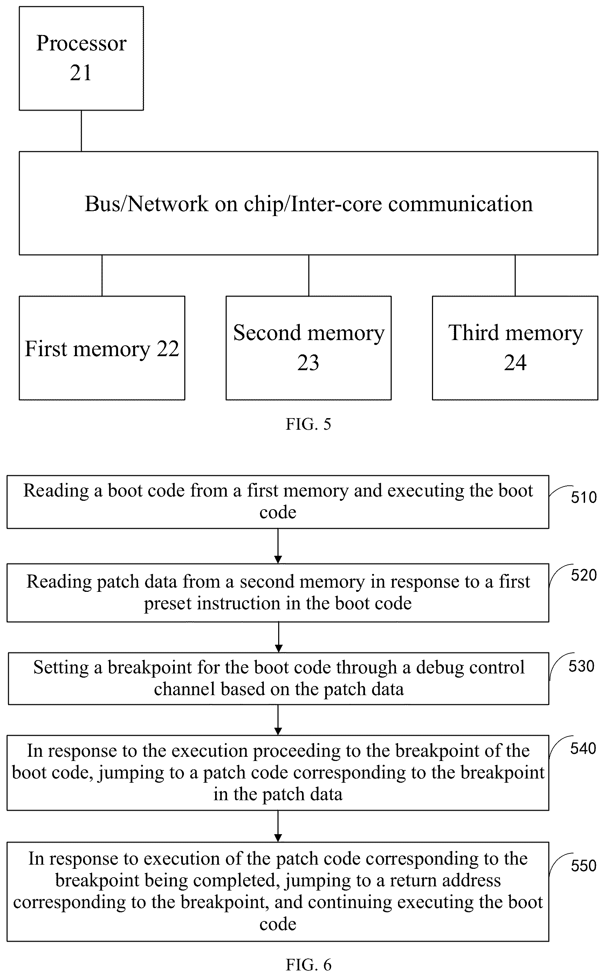

FIG. 5 is a schematic diagram of a structure of a boot code patching apparatus according to yet another exemplary embodiment of the present disclosure. As shown in FIG. 5, the processor 21 communicates with the first memory 22, the second memory 23, and the third memory 24 according to any one of the following manners: a bus, a network on chip, and inter-core communication, to implement access to the memory.

The foregoing embodiments of the present disclosure may be implemented separately or in any combination without conflict. This may be specifically set according to actual requirements, and is not limited in the present disclosure.

### Exemplary method

FIG. 6 is a schematic flowchart of a boot code patching method according to an exemplary embodiment of the present disclosure. The boot code patching method provided in this embodiment of the present disclosure may be implemented by the boot code patching apparatus provided in any one of the foregoing embodiments of the present disclosure. The method shown in FIG. 6 may include the following steps.

Step 510: Reading a boot code from a first memory and executing the boot code.

Step 520: Reading patch data from a second memory in response to a first preset instruction in the boot code.

Step 530: Setting a breakpoint for the boot code through a debug control channel based on the patch data.

Step 540: In response to the execution proceeding to the breakpoint of the boot code, jumping to a patch code corresponding to the breakpoint in the patch data.

Step 550: In response to execution of the patch code corresponding to the breakpoint being completed, jumping to a return address corresponding to the breakpoint, and continuing executing the boot code.

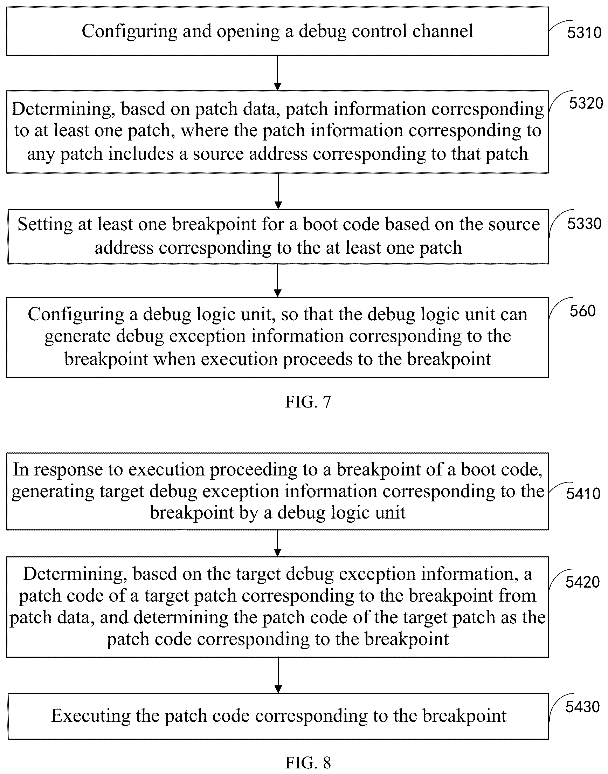

FIG. 7 is a schematic flowchart of a boot code patching method according to another exemplary embodiment of the present disclosure.

In some optional embodiments, on the basis of the embodiment shown in FIG. 6, as shown in FIG. 7, step 530 of setting a breakpoint for the boot code through a debug control channel based on the patch data includes:
step 5310: configuring and opening a debug control channel;
step 5320: determining, based on the patch data, patch information corresponding to at least one patch, wherein the patch information corresponding to any patch includes a source address corresponding to that patch; and

step 5330: setting at least one breakpoint for the boot code based on the source address corresponding to the at least one patch.

The method in this embodiment of the present disclosure further includes:
step 560: configuring a debug logic unit, so that the debug logic unit can generate debug exception information corresponding to the breakpoint when the execution proceeds to the breakpoint.

In some optional embodiments, step 5310 of configuring and opening a debug control channel includes: configuring a first preset register corresponding to the debug control channel to a first preset status.

In some optional embodiments, step 560 of configuring a debug logic unit includes: configuring a second preset register corresponding to the debug logic unit to a second preset status.

FIG. 8 is a schematic flowchart of a boot code patching method according to still another exemplary embodiment of the present disclosure.

In some optional embodiments, on the basis of any one of the foregoing embodiments, step 540 of in response to the execution proceeding to the breakpoint of the boot code, jumping to a patch code corresponding to the breakpoint in the patch data includes:
step 5410: in response to the execution proceeding to the breakpoint of the boot code, generating target debug exception information corresponding to the breakpoint by the debug logic unit;
step 5420: determining, based on the target debug exception information, a patch code of a target patch corresponding to the breakpoint from the patch data, and determining the patch code of the target patch as the patch code corresponding to the breakpoint; and
step 5430: executing the patch code corresponding to the breakpoint.

In some optional embodiments, on the basis of any one of the foregoing embodiments, after the reading patch data from a second memory, the method further includes: storing the patch data into a third memory, which is a volatile memory.

Step 5420 of determining, based on the target debug exception information, a patch code of a target patch corresponding to the breakpoint from the patch data includes:
determining, based on the target debug exception information, a target source address corresponding to the breakpoint; reading the patch data from the third memory, and determining, based on the patch data, patch information corresponding to at least one patch, wherein the patch information corresponding to any patch includes a source address, a return address, and a patch code corresponding to that patch; and matching the target source address with the source address in the patch information corresponding to the at least one patch, and determining, based on a matching result, the patch code of the target patch corresponding to the breakpoint.

In some optional embodiments, on the basis of any one of the foregoing embodiments, after the reading patch data from a second memory, the method further includes: parsing the patch data according to the preset patch format to obtain the patch information corresponding to the at least one patch, wherein the patch information corresponding to any patch includes the source address, the return address, and the patch code corresponding to that patch; and storing the patch information corresponding to the at least one patch into the third memory, which is a volatile memory.

In some optional embodiments, step 5420 of determining, based on the target debug exception information, a patch code of a target patch corresponding to the breakpoint from the patch data includes:
determining, based on the target debug exception information, a target source address corresponding to the breakpoint; reading the patch information corresponding to the at least one patch from the third memory; and matching the target source address with the source address in the patch information corresponding to the at least one patch, and determining, based on a matching result, the patch code of the target patch corresponding to the breakpoint.

In some optional embodiments, the patch data includes the return address corresponding to at least one patch.

Step 550 of in response to execution of the patch code corresponding to the breakpoint being completed, jumping to a return address corresponding to the breakpoint, and continuing executing the boot code includes: in response to the execution of the patch code corresponding to the breakpoint being completed, obtaining the return address corresponding to the breakpoint from the patch data; and jumping to the return address, and executing an instruction corresponding to the return address in the boot code.

In some optional embodiments, the second memory is a one-time programmable memory. After the reading the patch data from the second memory, the method further includes: performing legitimacy and integrity verification on the patch data, to obtain a verification result.

Step 530 of setting a breakpoint for the boot code through a debug control channel based on the patch data includes:
in response to the verification result being passed, setting a breakpoint for the boot code through the debug control channel based on the patch data.

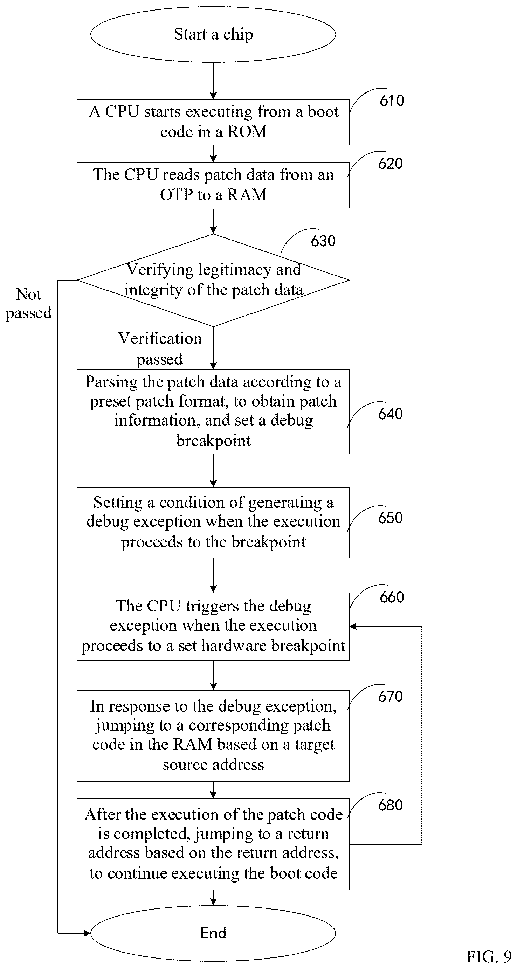

In some optional embodiments, FIG. 9 is a flow block diagram of a boot code patching method according to an exemplary embodiment of the present disclosure. As shown in FIG. 9, the boot code patching method provided in this embodiment of the present disclosure includes the following steps.

Step 610: A CPU starts executing from a boot code in a ROM. The ROM serves as the first memory. After a chip (or an electronic device) is powered on and is released from reset, the CPU obtains the boot code from the ROM and executes the boot code.

Step 620: The CPU reads patch data from an OTP to a RAM, wherein the OTP serves as the second memory and the RAM serves as the third memory. When execution proceeds to the first preset instruction in the boot code, the CPU reads the patch data from the OTP and writes the patch data into the RAM.

Step 630: Verifying legitimacy and integrity of the patch data, to obtain a verification result. If the verification result is passed, step 640 is performed. If the verification result is not passed, a startup process ends.

Step 640: Parsing the patch data according to a preset patch format, to obtain patch information, and set a debug breakpoint. Optionally, the patch data is parsed according to the preset patch format, the patch information of the patch that is obtained through parsing is stored into the RAM, and the breakpoint is set for the boot code based on the patch data.

Step 650: Setting a condition of generating a debug exception when the execution proceeds to the breakpoint, to ensure that a debug exception (that is, the debug exception information) can be generated when the execution proceeds to the breakpoint.

Step 660: The CPU triggers the debug exception when the execution proceeds to a set hardware breakpoint.

Step 670: In response to the debug exception, the processor determines the target source address of the breakpoint, jumps to a corresponding patch code in the RAM based on the target source address, and executes the patch code to patch the boot code.

Step 680: After the execution of the patch code is completed, returning to the boot code in the ROM based on the return address corresponding to the patch code, to continue to execute a subsequent boot code. If the execution proceeds to a next set breakpoint, steps 660 and 670 are iterated until the execution of the boot code is completed, so as to end a boot code-based startup process.

According to the boot code patching method provided in this embodiment of the present disclosure, the boot code in the ROM is patched through a debugging system and an exception handling mechanism of an electronic device or a system on chip, thereby avoiding adding hardware logic to the electronic device or the system on chip, and avoiding increasing complexity of hardware implementation.

The foregoing embodiments of the present disclosure may be implemented separately or in any combination without conflict. This may be specifically set according to actual requirements, and is not limited in the present disclosure.

For beneficial technical effects corresponding to the exemplary embodiments of this method, reference may be made to the corresponding beneficial technical effects in the section of exemplary apparatus described above, and details are not described herein again.

Any boot code patching method provided in the embodiments of the present disclosure may be implemented by any suitable electronic device with a data processing capability, including but not limited to a terminal device, a server, and other electronic devices. Alternatively, any boot code patching method provided in the embodiments of the present disclosure may be implemented by the processor. For example, the processor implements any boot code patching method described in the embodiments of the present disclosure by invoking a corresponding instruction stored in the memory. Details are not described below.

### Exemplary electronic device

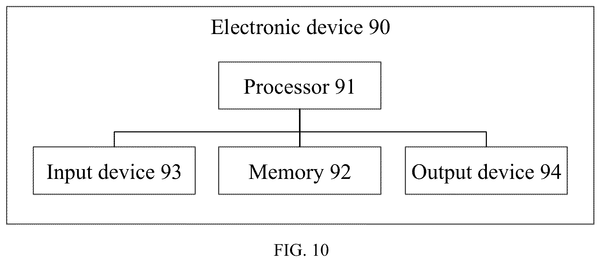

FIG. 10 is a diagram of a structure of an electronic device according to an embodiment of the present disclosure. The electronic device includes at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may run the one or more program instructions to implement the boot code patching method according to various embodiments of the present disclosure that are described above and/or other desired functions.

In an example, the electronic device 90 may further include an input device 93 and an output device 94. These components are connected to each other through a bus system and/or another form of connection mechanism (not shown).

The input device 93 may further include a touch screen, a microphone, and various sensors.

The output device 94 may output various information to the outside, and may include, for example, a display, a speaker, a communication network, and a remote output device connected to the communication network.

Certainly, for simplicity, FIG. 10 shows only some of components in the electronic device 90 that are related to the present disclosure, and components such as a bus and an input/output interface are omitted. In addition, according to specific application situations, the electronic device 90 may further include any other appropriate components.

An embodiment of the present disclosure further provides a system on chip, which includes the boot code patching apparatus provided in any one of the foregoing embodiments. The boot code patching apparatus may be configured to implement the boot code patching method provided in any one of the foregoing embodiments of the present disclosure.

### Exemplary computer program product and computer readable storage medium

In addition to the foregoing method and device, embodiments of the present disclosure may also provide a computer program product, which includes computer program instructions. When the computer program instructions are run by a processor, the processor is enabled to perform the steps, of the boot code patching method according to the embodiments of the present disclosure, that are described in the "Exemplary method" section described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium storing computer program instructions. When the computer program instructions are run by the processor, the processor is enabled to perform the steps, of the boot code patching method according to the embodiments of the present disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it cannot be considered that these advantages, superiorities, and effects are necessary for the embodiments of the present disclosure. In addition, specific details described above are merely for examples and for ease of understanding, rather than limitations. The details described above do not limit that the present disclosure must be implemented by the foregoing specific details.

A person skilled in the art may make various modifications and variations to the present disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A boot code patching apparatus, **characterized in that** the boot code patching apparatus comprises:
a first memory (22), configured to store a boot code;
a second memory (23), configured to store preset patch data; and
a processor (21), configured to:
read the boot code from the first memory (22) and execute the boot code;
read the patch data from the second memory (23) in response to a first preset instruction in the boot code;
set a breakpoint for the boot code through a debug control channel (30), based on the patch data;
in response to the execution proceeding to the breakpoint of the boot code, jump to a patch code corresponding to the breakpoint in the patch data; and
in response to execution of the patch code corresponding to the breakpoint being completed, jump to a return address corresponding to the breakpoint, and continue executing the boot code.

2. The apparatus according to claim 1, wherein after reading the patch data from the second memory (23), the processor (21) is specifically configured to:
configure and open a debug control channel (30);
determine, based on the patch data, patch information corresponding to at least one patch, wherein the patch information corresponding to any patch comprises a source address corresponding to that patch; and
set at least one breakpoint for the boot code based on the source address corresponding to the at least one patch, and configure a debug logic unit (31), so that the debug logic unit (31) can generate debug exception information corresponding to the breakpoint when the execution proceeds to the breakpoint.

3. The apparatus according to claim 2, wherein the configuring and opening a debug control channel (30) comprises:
configuring a first preset register corresponding to the debug control channel (30) to a first preset status; and/or,
the configuring a debug logic unit (31) comprises:
configuring a second preset register corresponding to the debug logic unit (31) to a second preset status.

4. The apparatus according to claim 1, wherein the in response to the execution proceeding to the breakpoint of the boot code, jumping to a patch code corresponding to the breakpoint in the patch data comprises:
in response to the execution proceeding to the breakpoint of the boot code, generating target debug exception information corresponding to the breakpoint by the debug logic unit (31);
determining, based on the target debug exception information, a patch code of a target patch corresponding to the breakpoint from the patch data, and determining the patch code of the target patch as the patch code corresponding to the breakpoint; and
executing the patch code corresponding to the breakpoint.

5. The apparatus according to claim 4, wherein after reading the patch data from the second memory (23), the processor (21) is further configured to:
store the patch data into a third memory (24), which is a volatile memory; and
the determining, based on the target debug exception information, a patch code of a target patch corresponding to the breakpoint from the patch data comprises:
determining, based on the target debug exception information, a target source address corresponding to the breakpoint;
reading the patch data from the third memory (24), and determining, based on the patch data, patch information corresponding to at least one patch, wherein the patch information corresponding to any patch comprises a source address, a return address, and a patch code corresponding to that patch; and
matching the target source address with the source address in the patch information corresponding to the at least one patch, and determining, based on a matching result, the patch code of the target patch corresponding to the breakpoint.

6. The apparatus according to claim 4, wherein after reading the patch data from the second memory (23), the processor (21) is further configured to:
parse the patch data according to a preset patch format to obtain patch information corresponding to at least one patch, wherein the patch information corresponding to any patch comprises a source address, a return address, and a patch code corresponding to that patch; and store the patch information corresponding to the at least one patch into a third memory (24), which is a volatile memory; and
the determining, based on the target debug exception information, a patch code of a target patch corresponding to the breakpoint from the patch data comprises:
determining, based on the target debug exception information, a target source address corresponding to the breakpoint;
reading the patch information corresponding to the at least one patch from the third memory (24); and
matching the target source address with the source address in the patch information corresponding to the at least one patch, and determining, based on a matching result, the patch code of the target patch corresponding to the breakpoint.

7. The apparatus according to claim 4, wherein the patch data comprises a return address corresponding to at least one patch; and
the in response to execution of the patch code corresponding to the breakpoint being completed, jumping to a return address corresponding to the breakpoint, and continuing executing the boot code comprises:
in response to the execution of the patch code corresponding to the breakpoint being completed, obtaining the return address corresponding to the breakpoint from the patch data; and
jumping to the return address, and executing an instruction corresponding to the return address in the boot code.

8. The apparatus according to any one of claims 1 to 7, wherein the second memory (23) is a one-time programmable memory; and after reading the patch data from the second memory (23), the processor (21) is further configured to:
perform legitimacy and integrity verification on the patch data, to obtain a verification result; and
the setting a breakpoint for the boot code through a debug control channel (30) based on the patch data comprises:
in response to the verification result being passed, setting a breakpoint for the boot code through the debug control channel (30) based on the patch data.

9. A boot code patching method, **characterized in that** the boot code patching method comprises:
reading (510) a boot code from a first memory and executing the boot code;
reading (520) patch data from a second memory in response to a first preset instruction in the boot code;
setting (530) a breakpoint for the boot code through a debug control channel based on the patch data;
in response to the execution proceeding to the breakpoint of the boot code, jumping (540) to a patch code corresponding to the breakpoint in the patch data; and
in response to execution of the patch code corresponding to the breakpoint being completed, jumping (550) to a return address corresponding to the breakpoint, and continuing executing the boot code.

10. A computer readable storage medium, wherein the storage medium stores a computer program, and the computer program is executed by a processor to implement the boot code patching method according to claim 9.

11. An electronic device (90), **characterized in that** the electronic device comprises:
a processor (91); and
a memory (92), configured to store processor-executable instructions, wherein
the processor (91) is configured to read the executable instructions from the memory (92), and execute the executable instructions to implement the boot code patching method according to claim 9.

12. A system on chip, **characterized in that** the system on chip comprises:
a boot code patching apparatus, wherein the boot code patching apparatus comprises:
a first memory (22), configured to store a boot code;
a second memory (23), configured to store preset patch data; and
a processor (21), configured to:
read the boot code from the first memory (22) and execute the boot code;
read the patch data from the second memory (23) in response to a first preset instruction in the boot code;
set a breakpoint for the boot code through a debug control channel (30), based on the patch data;
in response to the execution proceeding to the breakpoint of the boot code, jump to a patch code corresponding to the breakpoint in the patch data; and
in response to execution of the patch code corresponding to the breakpoint being completed, jump to a return address corresponding to the breakpoint, and continue executing the boot code.

13. The system on chip according to claim 12, wherein after reading the patch data from the second memory (23), the processor (21) is specifically configured to:
configure and open a debug control channel (30);
determine, based on the patch data, patch information corresponding to at least one patch, wherein the patch information corresponding to any patch comprises a source address corresponding to that patch; and
set at least one breakpoint for the boot code based on the source address corresponding to the at least one patch, and configure a debug logic unit (31), so that the debug logic unit (31) can generate debug exception information corresponding to the breakpoint when the execution proceeds to the breakpoint.

14. The system on chip according to claim 13, wherein the configuring and opening a debug control channel (30) comprises:
configuring a first preset register corresponding to the debug control channel (30) to a first preset status; and/or,
the configuring a debug logic unit (31) comprises:
configuring a second preset register corresponding to the debug logic unit (31) to a second preset status.

15. The system on chip according to claim 12, wherein the in response to the execution proceeding to the breakpoint of the boot code, jumping to a patch code corresponding to the breakpoint in the patch data comprises:
in response to the execution proceeding to the breakpoint of the boot code, generating target debug exception information corresponding to the breakpoint by the debug logic unit (31);
determining, based on the target debug exception information, a patch code of a target patch corresponding to the breakpoint from the patch data, and determining the patch code of the target patch as the patch code corresponding to the breakpoint; and
executing the patch code corresponding to the breakpoint.
